# FASCICULE DE BREVET EUROPEEN

(11) **EP 3 230 790 B1**
(45) Date de publication et mention de la délivrance du brevet: **18.03.2020**
(21) Numéro de dépôt: 15817996.0
(22) Date de dépôt: 10.12.2015
(51) Int. Cl.: G02B 27/01

(54) **AFFICHEUR TÊTE HAUTE POUR VÉHICULE AUTOMOBILE**
FRONTSICHTANZEIGE FÜR EIN KRAFTFAHRZEUG
HEADS-UP DISPLAY FOR A MOTOR VEHICLE

(30) Priorité: 10.12.2014 FR 1402811
(43) Date de publication de la demande: 18.10.2017
(73) Titulaire: Valeo Comfort and Driving Assistance, 94046 Créteil Cedex (FR)
(72) Inventeur: DABIC, Stéphanie, 94046 Créteil Cedex (FR); DUMONT, Laëtitia, 94046 Créteil Cedex (FR); IRZYK, Michael, 94046 Créteil Cedex (FR); DELAHAYE, Vincent, 94046 Créteil Cedex (FR)
(74) Mandataire: Delplanque, Arnaud
(86) Numéro de dépôt international: PCT/FR2015/053421
(87) Numéro de publication internationale: WO 2016/092220

(56) Documents cités:
- WO-A2-2008/109231
- DE-A1-102005 025 572
- JP-A- S5 880 616
- JP-A- 2008 209 724
- US-B1- 6 864 927

## Description

### Domaine technique de l'invention

L'invention concerne un afficheur tête haute pour véhicule automobile.

### Arrière-plan technologique

L'invention trouvera ses applications, par exemple, dans les véhicules automobiles pour informer les utilisateurs du véhicule, en particulier son conducteur.

Il est connu d'équiper un véhicule automobile avec un visionneur tête haute, également connu sous le nom afficheur tête haute ou HUD (pour « head-up display » en anglais). Un tel afficheur est placé dans le champ de vision du conducteur automobile et affiche une information relative à l'état du véhicule, du trafic ou autre.

Ce type d'afficheur tête haute pour véhicule automobile nécessite l'obtention d'une image avec une luminosité suffisante pour que l'utilisateur, et notamment le conducteur du véhicule, puisse suffisamment voir l'image, et ce en toute situation, jour et nuit et selon les conditions météorologiques (ensoleillé ou nuageux).

Parmi les technologies possibles pour former une telle image grâce à l'afficheur tête haute, la plus utilisée dans l'art antérieur est la technologie d'écran à cristaux liquides, notamment d'écran cristaux liquides à transistors en couches minces, dits TFT-LCD (pour Thin-Film Transistor Liquid Crystal Display en anglais). Ces écrans TFT-LCD nécessitent, pour l'affichage d'une image, un rétro-éclairage généralement effectué par une pluralité de diodes électroluminescentes (DEL ou LED pour Light-Emitting Diode en anglais). En pratique, cet écran TFT-LCD et le rétro-éclairage sont compris dans un ensemble appelé dispositif de génération d'image aussi appelé « imager ».

En aval de l'écran selon le sens de déplacement des faisceaux lumineux, l'afficheur tête haute comprend généralement une lame semi-réfléchissante et un dispositif de réflexion à un ou plusieurs miroirs plan ou concaves.

L'image s'affiche à travers la lame semi-réfléchissante et par un grossissement et/ou par transparence au-delà du pare-brise du véhicule.

Toutefois, pour certaines applications et/ ou dans certains conditions d'éclairage, le contraste de l'image affichée n'est pas optimal.

De plus, dans un futur proche, il aura des voitures à conduite automatique. Lors des trajets, le passager / conducteur aura donc du temps disponible pour par exemple lire, consulter son courriel ou naviguer sur Internet. Or des écrans actuels disponibles sont généralement disposés au niveau de la planche de bord, au milieu entre les deux sièges de passager avant ce que nécessite pour une consultation prolongée de tourner la tête et ces écrans sont donc peu adaptés pour une activité prolongée pour consulter un écran d'affichage.

### Objectifs de l'invention

L'invention vise à pallier au moins certains des inconvénients ci-dessus. En particulier, l'invention vise à fournir un dispositif de rétroéclairage permettant d'améliorer le contraste de l'image affichée sous certaines conditions.

### Exposé de l'invention

A cet effet, l'invention a pour l'afficheur tête haute de la revendication 1.

L'utilisation d'au moins une portion opaque ou pouvant être rendue opaque permet d'augmenter le contraste de l'image affichée. En conduite automatique, l'utilisateur peut lire les informations projetées sur la zone semi-réfléchissante avec un confort amélioré et sans risque de malaise. De plus, comme la zone semi-réfléchissante est dans le champ de vision de l'utilisateur, ce dernier dispose alors d'un écran de grande taille sans devoir détourner les yeux de la route.

L'afficheur tête haute peut comporter en outre une ou plusieurs des caractéristiques suivantes prises seules ou en combinaison :
Selon un aspect, la zone semi-réfléchissante est formée par une lame semi-réfléchissante destinée à être placé au niveau de la planche de bord devant un pare-brise, ce qui permet de conformer la lame à souhait.

La zone semi-réfléchissante peut être formée par un pare-brise d'un véhicule automobile, de sorte que l'on économise une lame semi-réfléchissante individuelle.

La zone semi-réfléchissante est par exemple réalisée par un verre électrochrome, ce qui permet une commande d'opacité partielle.

Le verre électrochrome est par exemple formé d'une lame de verre semi-réfléchissante et d'un film électrochrome collé sur la lame de verre. Ceci permet l'adaptation sur des HUD existants.

Ainsi, l'opacité est obtenue lors de la conduite automatique du véhicule.

Selon encore un autre aspect, la zone semi-réfléchissante peut être rendue opaque dans sa totalité.

Puis, la zone semi-réfléchissante comporte par exemple une seule portion opaque ou pouvant être rendu opaque, cette portion étant une portion proximale par rapport à une planche de bord.

La zone semi-réfléchissante peut comporter un revêtement auto nettoyant. A long terme, on évite ainsi le dépôt de poussières qui peuvent altérer la lisibilité des informations projetées vers la zone semi-réfléchissante.

D'autres avantages et caractéristiques apparaîtront à la lecture de la description de l'invention, ainsi que des dessins annexés sur lesquels :
- la figure 1 montre de façon schématique un afficheur tête haute,
- la figure 2 montre une vue en coupe transversale d'un schéma d'une lame semi-réfléchissante selon un premier mode de réalisation,
- la figure 3 montre une image de l'afficheur des figures 1 et 2 en fonctionnement,
- la figure 4 montre une vue en coupe transversale d'un schéma d'une lame semi-réfléchissante selon un second mode de réalisation,
- la figure 5 montre une image de l'afficheur selon le mode de réalisation de la figure 4 en fonctionnement,

Sur toutes les figures, les éléments identiques portent les mêmes numéros de référence.

On va maintenant décrire un exemple d'un mode de réalisation en référence aux figures.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

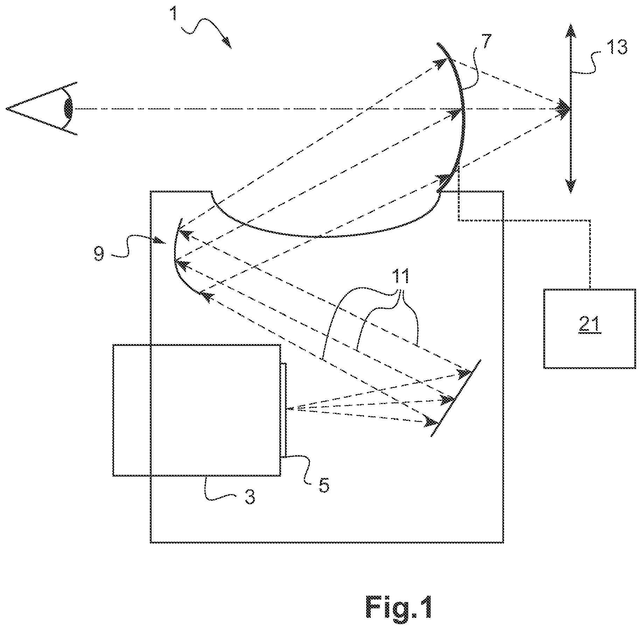

La figure 1 montre un schéma d'un afficheur tête haute 1.

Cet afficheur 1 comprend un dispositif 3 de génération d'image.

Ce dispositif 3 de génération d'image comprend par exemple un écran à cristaux liquides, ici un écran 5 à cristaux liquides (écran LCD) par exemple à transistors en couches minces, et un dispositif de rétro-éclairage intégré (non représenté). L'écran 5 à cristaux liquides peut être à matrice active ou passive. L'écran 5 à cristaux liquides à transistors en couches minces est communément appelé écran TFT-LCD (pour Thin-Film Transistor Liquid Crystal Display en anglais), et permet la formation de l'image par le dispositif 3 de génération d'image.

Le dispositif 3 de génération d'image forme donc une image à l'aide de l'écran à cristaux liquides 5.

En aval de l'écran 5 selon le sens de déplacement des faisceaux lumineux, l'afficheur 1 comprend au moins une lame semi-réfléchissante 7, de forme droite ou légèrement courbée en section transversale, et un dispositif de réflexion 9 interposé sur le trajet de l'image entre l'écran 5 et la lame semi-réfléchissante 7, le dispositif de réflexion 9 comprenant un ou plusieurs miroirs plans ou concaves, comme représenté sur la figure 1.

La lame semi-réfléchissante 7 forme une zone d'affichage semi-réfléchissante recevant des faisceaux lumineux dudit générateur d'image.

Cette lame 7 présente par exemple un pouvoir de réflexion au moins égal à 20%, ce qui permet à l'utilisateur de voir au travers de la lame la route empruntée par le véhicule tout en permettant de voir l'image affichée.

Selon une variante non représentée, on peut prévoir que la zone d'affichage semi-réfléchissante est formée par une partie du pare-brise du véhicule. Ceci permettrait d'économiser la lame semi-réfléchissante de l'afficheur tête haute 1, mais supposerait que le pare-brise ait dans la zone d'affichage une forme adaptée pour l'afficheur 1 notamment en termes de courbure et un pouvoir semi-réfléchissant adapté, par exemple en appliquant un film semi-transparent sur le pare-brise.

Sur cette figure, le trajet de l'image est symbolisé par trois flèches 11 en pointillé qui se réfléchissent sur le dispositif de réflexion 9 avant de s'afficher à travers la lame semi-réfléchissante 7.

Cette dernière permet via un grossissement et/ou par transparence, un affichage de l'image au-delà de la lame semi-réfléchissante, notamment au-delà du pare-brise du véhicule, au niveau d'un écran virtuel 13.

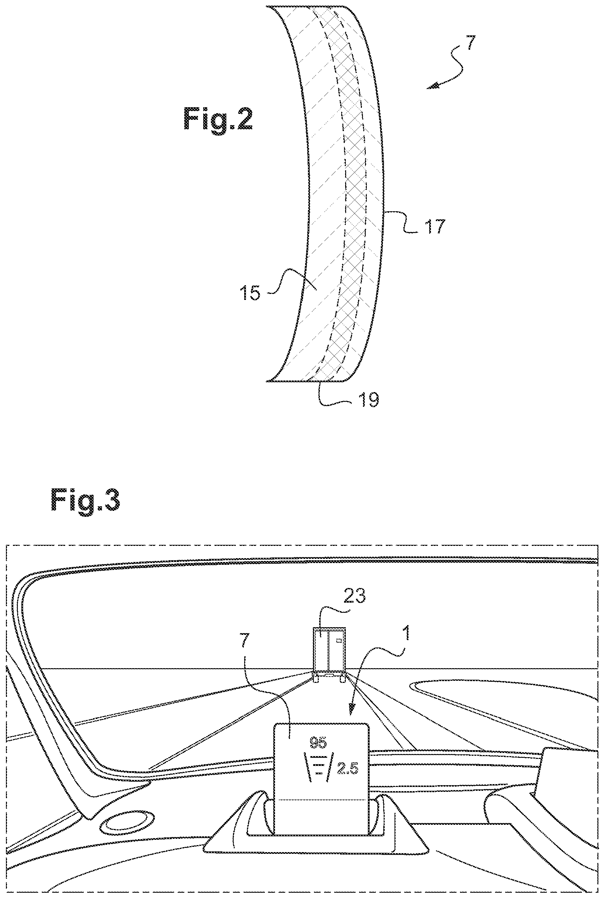

La figure 2 montre en coupe transversale un mode de réalisation d'une lame semi-réfléchissante 7.

Selon cet exemple, la lame 7 est par exemple formée de deux couches de verre 15 et 17, prenant en sandwich par exemple un film à cristaux liquides 19 relié électriquement à une unité de contrôle 21 pour pouvoir commander, par application d'un champ électrique adapté orientant les cristaux liquides ou changeant leur couleur, l'opacification de la lame 7 ou non.

Dans la présente application, par verre, on entend aussi bien un verre en silice qu'un verre par exemple en matière plastique comme du polycarbonate cristal.

En variante, on peut utiliser une lame 7 formé par une seule couche de verre sur laquelle est collé un film électrochrome, par exemple rendu blanc et opaque lors de l'application d'un courant électrique et transparent en absence de courant.

Selon l'exemple de la figure 2, la lame 7 est dans son ensemble électrochrome, c'est-à-dire elle peut, selon un signal de commande de l'unité de contrôle 21 être rendue complètement opaque.

Selon une variante non représentée, seulement une partie de la lame 7, par exemple la partie inférieure, proximale à une planche de bord, peut être rendue opaque, par exemple par le fait que le film à cristaux liquide 19 n'est présent que dans la partie inférieure de la lame 7.

L'utilisation d'au moins une portion opaque ou pouvant être rendue opaque permet d'augmenter le contraste de l'image affichée et de rendre le contraste constant. Pour des messages d'alertes, l'utilisateur peut être mieux averti. En conduite automatique, l'utilisateur peut lire les informations projetées sur la zone semi-réfléchissante 7 avec un confort amélioré et sans risque de malaise. De plus, comme la zone semi-réfléchissante 7 est dans le champ de vision de l'utilisateur, ce dernier dispose alors d'un écran de grande taille sans devoir détourner sa tête.

L'unité de contrôle 21 est par exemple configurée pour commander à rendre opaque la lame semi-réfléchissante 7 à réception d'un signal de commande, comme un signal d'un mode de lecture en conduite automatique.

Ainsi, l'opacité n'est obtenue quand dans les situations autorisées, par exemple lors de la conduite automatique véhicule.

La figure 3 montre une image de l'afficheur des figures 1 et 2 en fonctionnement. Dans cet exemple, le véhicule s'est approché de trop près du véhicule 23 qui le précède. Ceci génère un signal d'alerte qui est également transmis à l'unité de contrôle 21 rendant la lame semi-transparente 7 complètement opaque.

Ainsi, par l'opacification l'attention de l'utilisateur est attirée et par son aspect opaque l'information délivrée est mieux visible avec notamment plus de contraste.

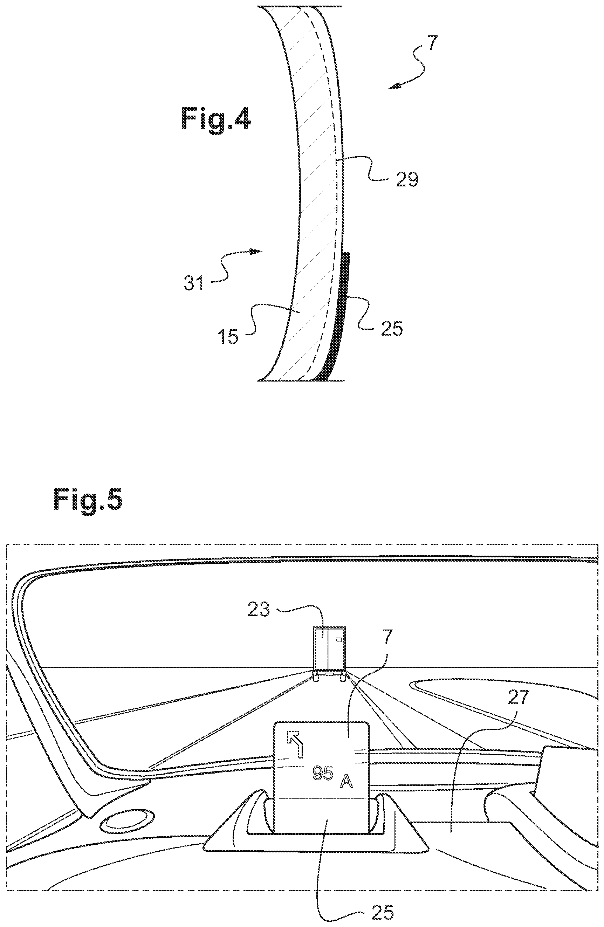

La figure 4 montre une vue en coupe transversale d'un schéma d'une lame semi-réfléchissante 7 selon un second mode de réalisation.

Dans ce mode de réalisation, la lame semi-réfléchissante 7 comporte une seule portion 25 opaque en permanence ou pouvant être rendue opaque, cette portion 25 étant une portion proximale par rapport à une planche de bord 27 du véhicule.

Ceci peut être réalisé par exemple par un film noir apposé sur la portion 25 de la face arrière 29 de la lame semi-réfléchissante 7.

La figure 5 montre une image de l'afficheur selon le mode de réalisation de la figure 4 en fonctionnement. Alors que la portion semi-réfléchissante de la lame 7 indique par exemple une direction à suivre au conducteur, la portion inférieure indique 25 avec un bon contraste l'arrivée d'un courriel.

Par ailleurs, la lame semi-réfléchissante 7 peut comporter un revêtement auto nettoyant sur sa face avant 31 recevant les faisceaux lumineux.

Ainsi, à long terme, on évite le dépôt de poussières qui peuvent altérer la lisibilité des informations projetées vers la zone semi-réfléchissante 7.

On comprend donc que le confort de l'utilisateur peut être amélioré de manière significative par le fait d'opacifier au moins en partie la lame semi-réfléchissante 7 en lui évitant des malaises lors de la lecture sur l'afficheur tête haute 1 et en attirant son attention dans des situation de conduite dangereuses.

## Revendications

1. Afficheur tête haute (1) comprenant
- un générateur d'image (3),
- une zone d'affichage semi-réfléchissante (7) recevant des faisceaux lumineux dudit générateur d'image (3),
- **caractérisé en ce que** la zone semi-réfléchissante (7) comporte au moins une portion pouvant être rendue opaque et **en ce qu'**il comprend une unité de contrôle (21) configurée pour commander à rendre opaque la portion de la zone-semi-réfléchissante (7) à réception d'un signal de commande et **en ce que** le signal de commande est un signal d'un mode de lecture en conduite automatique.

2. Afficheur selon la revendication 1, **caractérisé en ce que** la zone semi-réfléchissante est formée par une lame semi-réfléchissante (7) destinée à être placé au niveau de la planche de bord (27) devant un pare-brise.

3. Afficheur selon la revendication 1, **caractérisé en ce que** la zone semi-réfléchissante est formée par un pare-brise d'un véhicule automobile.

4. Afficheur selon l'une quelconque des revendications 1 à 3, **caractérisé en ce que** la zone semi-réfléchissante (7) est réalisée par un verre électrochrome.

5. Afficheur selon la revendication 4, **caractérisé en ce que** le verre électrochrome est formé d'une lame de verre semi-réfléchissante et d'un film électrochrome collé sur la lame de verre.

6. Afficheur selon l'une quelconque des revendications 1 à 5, **caractérisé en ce que** la zone semi-réfléchissante (7) peut être rendue opaque dans sa totalité.

7. Afficheur selon l'une quelconque des revendications 1 à 5, **caractérisé en ce que** la zone semi-réfléchissante (7) comporte une seule portion (25) pouvant être rendu opaque, cette portion (25) étant une portion proximale par rapport à une planche de bord (27).

8. Afficheur selon l'une quelconque des revendications 1 à 7, **caractérisé en ce que** la zone semi-réfléchissante (7) comporte un revêtement auto nettoyant.

## Patentansprüche

1. Frontsichtanzeige (1), welche umfasst:
- einen Bildgenerator (3),
- einen halbreflektierenden Anzeigebereich (7), der Lichtbündel des Bildgenerators (3) empfängt,
- **dadurch gekennzeichnet, dass** der halbreflektierende Bereich (7) wenigstens einen Abschnitt aufweist, der lichtundurchlässig gemacht werden kann, und dadurch, dass sie eine Steuereinheit (21) umfasst, die dafür ausgelegt ist zu bewirken, dass der Abschnitt des halbreflektierenden Bereichs (7) bei Empfang eines Steuersignals lichtundurchlässig wird, und dadurch, dass das Steuersignal ein Signal eines Lesemodus beim automatischen Fahren ist.

2. Anzeige nach Anspruch 1, **dadurch gekennzeichnet, dass** der halbreflektierende Bereich von einer halbreflektierenden Platte (7) gebildet wird, die dazu bestimmt ist, am Armaturenbrett (27) vor einer Windschutzscheibe angebracht zu werden.

3. Anzeige nach Anspruch 1, **dadurch gekennzeichnet, dass** der halbreflektierende Bereich von einer Windschutzscheibe eines Kraftfahrzeugs gebildet wird.

4. Anzeige nach einem der Ansprüche 1 bis 3, **dadurch gekennzeichnet, dass** der halbreflektierende Bereich (7) aus elektrochromem Glas hergestellt ist.

5. Anzeige nach Anspruch 4, **dadurch gekennzeichnet, dass** das elektrochrome Glas von einer halbreflektierenden Glasplatte und einer auf die Glasplatte geklebten elektrochromen Folie gebildet wird.

6. Anzeige nach einem der Ansprüche 1 bis 5, **dadurch gekennzeichnet, dass** der halbreflektierende Bereich (7) in seiner Gesamtheit lichtundurchlässig gemacht werden kann.

7. Anzeige nach einem der Ansprüche 1 bis 5, **dadurch gekennzeichnet, dass** der halbreflektierende Bereich (7) einen einzigen Abschnitt (25) aufweist, der lichtundurchlässig gemacht werden kann, wobei dieser Abschnitt (25) ein proximaler Abschnitt in Bezug auf ein Armaturenbrett (27) ist.

8. Anzeige nach einem der Ansprüche 1 bis 7, **dadurch gekennzeichnet, dass** der halbreflektierende Bereich (7) eine selbstreinigende Beschichtung aufweist.

## Claims

1. Head-up display device (1) comprising
- an image generator (3),
- a semi-reflecting display area (7) receiving light beams from said image generator (3),
**characterized in that** the semi-reflecting area (7) comprises at least one portion which can be made opaque and **in that** it comprises a control unit (21) configured for commanding the making opaque of the portion of the semi-reflecting area (7) on reception of a control signal and **in that** the control signal is a signal of a reading mode during automatic driving.

2. Display device according to Claim 1, **characterized in that** the semi-reflecting area is formed by a semi-reflecting lamina (7) intended to be placed at the level of the dashboard (27) in front of a windscreen.

3. Display device according to Claim 1, **characterized in that** the semi-reflecting area is formed by a windscreen of a motor vehicle.

4. Display device according to any one of Claims 1 to 3, **characterized in that** the semi-reflecting area (7) is made from an electrochromic glass.

5. Display device according to Claim 4, **characterized in that** the electrochromic glass is formed by a sheet of semi-reflecting glass and an electrochromic film stuck on the sheet of glass.

6. Display device according to any one of Claims 1 to 5, **characterized in that** the semi-reflecting area (7) can be made opaque in its entirety.

7. Display device according to any one of Claims 1 to 5, **characterized in that** the semi-reflecting area (7) comprises a single portion (25) which can be made opaque, this portion (25) being a proximal portion with respect to a dashboard (27).

8. Display device according to any one of Claims 1 to 7, **characterized in that** the semi-reflecting area (7) comprises a self-cleaning coating.
